# EUROPÄISCHE PATENTSCHRIFT

(11) **EP 1 372 946 B1**
(45) Veröffentlichungstag und Bekanntmachung des Hinweises auf die Patenterteilung: **17.09.2008**
(21) Anmeldenummer: 02701149.3
(22) Anmeldetag: 13.03.2002
(51) Int. Cl.: B31F 1/07, B29C 59/04

(54) **VORRICHTUNG ZUR BEHANDLUNG VON FLACHMATERIAL**
DEVICE FOR TREATING FLAT MATERIAL
DISPOSITIF DE TRAITEMENT DE MATERIAUX PLATS

(30) Priorität: 26.03.2001 CH 5442001
(43) Veröffentlichungstag der Anmeldung: 02.01.2004
(73) Patentinhaber: Boegli-Gravures S.A., CH-2074 Marin (CH)
(72) Erfinder: BOEGLI, Charles, 2074 Marin (CH)
(74) Vertreter: AMMANN PATENTANWÄLTE AG BERN
(86) Internationale Anmeldenummer: PCT/CH2002/000149
(87) Internationale Veröffentlichungsnummer: WO 2002/076716

(56) Entgegenhaltungen:
- EP-A1- 0 798 196
- EP-A1- 0 925 911
- EP-A1- 1 074 381
- WO-A1-00/69622
- WO-A1-97/48551
- WO-A1-99/54547
- US-A- 1 735 340
- US-A- 2 290 608
- US-A- 3 323 983
- US-A- 3 418 925
- US-A- 4 000 242
- US-A- 4 280 978

## Beschreibung

Die vorliegende Erfindung bezieht sich auf eine Vorrichtung zum Satinieren von Verpackungsfolien gemäss Oberbegriff von Patentanspruch 1, mit mindestens drei Prägewalzen und auf eine Vorrichtung gemäss Oberbegriff von Patentanspruch 2.

Eine solche Vorrichtung ist beispielsweise aus der WO-A-00/69622 bekannt, wobei diese Anmeldung ganz darauf gerichtet ist, dass die Walzen die gleiche Struktur aufweisen, insbesondere pyramidenstumpfförmige Zähne, wovon jeder Zahn einer Walze zwischen vier Zähne einer anderen Walze greift und die zusätzliche Walze die Aufgabe hat, insbesondere bei Flachmaterial mit relativ grossem Papier-und kleinem Metallisierungsanteil die Prägequalität zu erhöhen und den Verschleiss der Walzen zu verkleinern.

Die Prägestation zur Prägung von Faserbahnen wie für Taschentücher oder Toilettenpapier gemäss EP-A-1 074 381 weist eine glatte Gegenwalze und zwei darüber V-förmig angeordnete Prägewalzen auf. Eine solche Anordnung eignet sich jedoch nicht zum Satinieren oder Prägen von Sonderzeichen auf Materialien wie z.B. Zigarettenpapier, denn die nicht näher beschriebenen Prägewalzen mit einem eingezeichneten relativ groben Profil sind nicht vorgesehen, dafür eingesetzt zu werden.

Die EP-A-498 623 offenbart die Verwendung von Paaren von Stahl- und Gummirollen, wobei Noppen an den Stahlrollen in entsprechende Vertiefungen in der Gummirolle passen. Es ist auch vorgesehen, zwei Paare von gleichen oder ähnlichen Rollen zu verwenden. Solche Rollenpaare mit Vertiefungen in einer Gummirolle sind für das exakte Feinprägen sowie Satinieren, wie dies beispielsweise für die Behandlung von Verpackungsfolien verlangt wird, nicht geeignet, wobei das Flachmaterial faserhaltiges Material wie Papier ist, das nach dem Verfahren aufgebauscht wird.

Die US-A-4 280 978 offenbart eine Präge- und Perforations-Vorrichtung mit einer Präge- und zwei Gegenwalzen, wobei die Gegenwalzen Vertiefungen aufweisen, in die die Stacheln der Prägewalzen passen. Auch diese Vorrichtung ist für das exakte Feinprägen und Satinieren nicht geeignet.

Die US-A-2 290 608 offenbart ein Verfahren und eine Vorrichtung zum Zerknittern einer Metallfolie, um unregelmässige Muster zu erhalten, die für Reflektoren geeignet sind. Die Metallfolie läuft zwischen zwei Walzen mit Zapfen, Längsrillen, wellenlinienförmigen Rillen oder Honigwabenstruktur durch, wobei die Folie nach einem Durchlauf jeweils um 90° oder 45° gedreht wird. Eine solche Vorichtung ist weder zum Prägen noch zum Satinieren und auch nicht zum Prägen von Sicherheitszeichen auf dafür geeignete Materialien geeignet.

Des weitern sind die US-A-5 007 271 oder US-A-5 598 774 des gleichen Anmelders bekannt, die Prägevorrichtungen mit zwei Prägewalzen für Flachmaterial offenbaren. Unter Flachmaterial sind hier insbesondere Bänder oder Bahnen zu verstehen, die einseitig mit Metall, im allgemeinen Aluminium, beschichtet sind und deren Träger aus Papier oder sonst einem faserhaltigen Material bestehen, oder Folien, beispielsweise aus Kunststoff, Metall oder Compoundmaterialien.

Die letztgenannten Prägevorrichtungen werden unter anderem in der Verpackungsindustrie zum Satinieren von Verpackungsmaterialien eingesetzt, wobei gleichzeitig auch Signete, Schriftzüge und dergleichen eingeprägt werden können. Unter Satinieren wird dabei verstanden, die Oberfläche mit einem feinen Raster im Millimeter- und Submillimeterbereich zu versehen. Derartiges Bänder- oder blattförmiges Verpackungsmaterial, auch innerliner genannt, wird beispielsweise für die Verpackung von Tabakwaren, Zigaretten, Nahrungsmittel, Schokolade, Kaugummi und dergleichen verwendet.

Der genannten US-A-5 598 774 ist zu entnehmen, dass die angetriebene Walze ortsfest gelagert ist und mindestens eine der beiden Gegenwalzen freilaufend und so gelagert ist, dass die Achsen der Prägewalzen sowohl in Längsrichtung als auch/oder in Druckrichtung als auch/oder in Durchlaufrichtung des Materials auslenkbar sind. Dies ermöglicht eine Einstellung der Walzen, um ein genaues Ineinandergreifen der Zähne und damit ein einwandfreies Bearbeiten des Materials zu ermöglichen, ohne dieses zu zerknittern.

Die zuletzt genannten Vorrichtungen haben sich bewährt und bewähren sich, solange die zu satinierenden Folien, insbesondere Verpackungsfolien, vorwiegend aus Aluminium oder vorwiegend aus leicht zu faltendem Papier bestehen. Diese Verpackungsmaterialien haben beispielsweise beim Herstellen von Zigarettenpackungen die Aufgabe, während der Produktion eine abgezählte Anzahl von Zigaretten zu umhüllen, um anschliessend in eine Schachtel eingeschoben zu werden.

Während die erstgenannte Vorrichtung gemäss WO-A-00/69622 die erhofften Vorteile beim Prägen von sonst schwierig zu prägendem Flachmaterial erbrachte, hat es sich gezeigt, dass für bestimmte Sonderprägungen, die auf dem Flachmaterial Zeichen mit standort- und/oder lichtquellenabhängige optische Effekte erzeugen, die Walzen nicht die geeigneten Oberflächenstrukturen aufweisen.

Es ist von diesem bekannten Stand der Technik ausgehend eine erste Aufgabe der vorliegenden Erfindung, eine Vorrichtung zum Satinieren anzugeben, die mit grösserer Präzision und mit einer grösseren Vielfalt auf Verpackungsfolien Zeichen mit standort- und/oder lichtquellenabhängigen optische Effekten prägt, um schwer kopierbare Sicherheitsmerkmale zu erzeugen. Diese Aufgabe wird mit der Vorrichtung gemäss Patentanspruch 1 gelöst.

Es ist eine weitere Aufgabe der Erfindung, die Vorrichtung von Patentanspruch 1 zu vereinfachen und dennoch auf einem grossen Bereich von Verpackungsfolien eine Satinierung zu erzeugen, die mit grösserer Präzision und mit einer grösseren Vielfalt auf der Verpackungsfolie Zeichen mit standort- und/oder lichtquellenabhängigen optische Effekten ergibt, um schwer kopierbare Sicherheitsmerkmale zu erzeugen. Diese Aufgabe wird mit der Vorrichtung gemäss Patentanspruch 2 gelöst.

Weitere Vorteile und Merkmale sind in den abhängigen Ansprüchen definiert.

Die Erfindung wird im folgenden anhand von Zeichnungen von Ausführungsbeispielen näher erläutert.
- Figur 1: zeigt schematisch und in perspektivischer Sicht eine erste Ausführungsform der Erfindung mit drei Walzen,
- Figur 1A: zeigt schematisch und im Schnitt die Vorrichtung von Figur 1 mit dem zu prägenden Medium,
- Figur 2: zeigt eine Variante zum Beispiel von Figur 1,
- Figur 3: zeigt ein zweites Ausführungsbeispiel der erfindungsgemässen Vorrichtung,
- Figur 3A: zeigt ein Synchronisationsgetriebe von Figur 3,
- Figur 3B: zeigt schematisch die Pin up-Pin down-Zähnekonstellation,
- Figur 4: zeigt eine Variante zum Beispiel von Figur 3,
- Figur 5: zeigt ein drittes Ausführungsbeispiel der erfindungsgemässen Vorrichtung,
- Figur 6: zeigt eine Variante zum Beispiel von Figur 4,
- Figur 7: zeigt ein viertes Ausführungsbeispiel der erfindungsgemässen Vorrichtung,
- Figur 8: zeigt eine Variante zum Beispiel von Figur 7,
- Figur 9: zeigt eine weitere Variante zu Figur 7,
- Figur 9A: zeigt im Schnitt ein Synchronisationsgetriebe der Anordnung von Figur 9,
- Figur 10: zeigt ein weiteres Ausführungsbeispiel, mit zwei Prägewalzen, und
- Figur 11: zeigt eine Ausführungsvariante zu Figur 10.

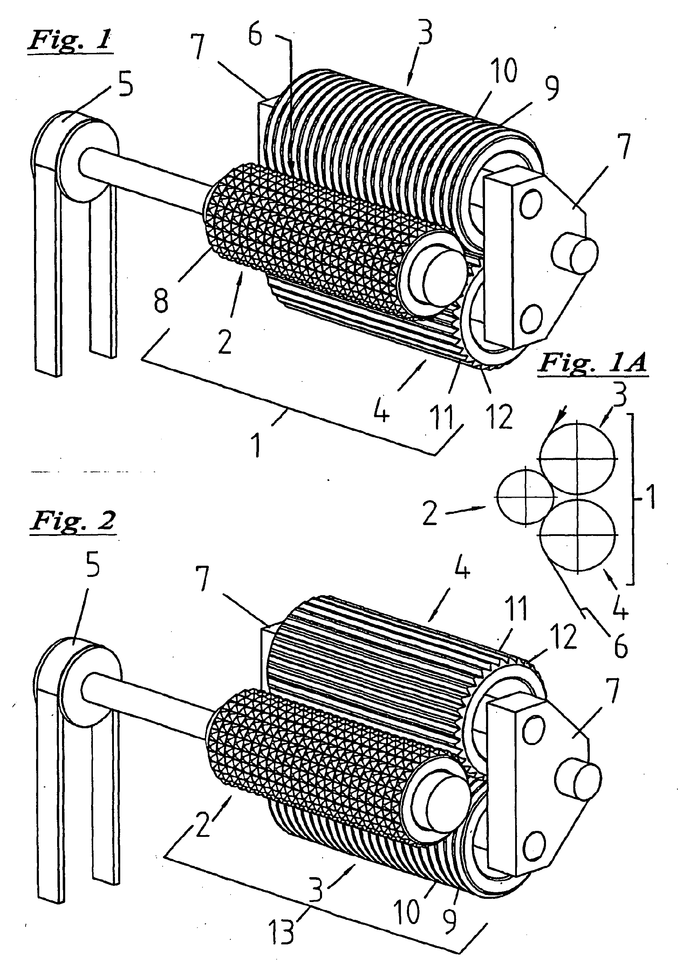

Figur 1 zeigt ein erstes Ausführungsbeispiel einer Vorrichtung 1, mit drei Prägewalzen, mit einer ersten Prägewalze 2, die mit einer zweiten Prägewalze 3 und einer nachfolgenden Prägewalze 4 zusammenarbeitet, wobei die erste Walze 2 durch einen Antrieb 5 angetrieben ist, während die beiden anderen Walzen 3 und 4, die Gegenwalzen, weder angetrieben noch mit der angetriebenen Walze über Synchronisationselemente, wie z.B. Zahnräder synchronisiert sind, sondern über das Medium 6, siehe Fig. 1A angetrieben werden.

Wie in Figur 1A angedeutet, verläuft das zu prägende Medium 6, beispielsweise ein mit einer dünnen Schicht von 0,006 mm metallisiertes Papier, in vertikaler Richtung, das heisst in den Figuren von oben nach unten.

In Abweichung von der in der eingangs erwähnten WO-A-0 069 622 offenbarten Vorrichtung des gleichen Anmelders, weisen die drei Prägewalzen nicht die gleiche Struktur auf. Die erste, angetriebene Prägewalze 2 ist im Ausführungsbeispiel gemäss Figur 1 dieselbe wie bei der vorbekannten Vorrichtung und weist eine Anzahl von Zähnen 8 auf, die als Pyramidenstumpfe ausgebildet sind, wobei die Seiten der Pyramiden parallel bzw. senkrecht zur Längsachse der Prägewalze stehen, wie dies in Figur 1 eingezeichnet ist. In vorliegendem Ausführungsbeispiel ist die zweite Prägewalze 3 mit Rillen 9 versehen, die um den ganzen Umfang laufen und parallel zueinander angeordnet sind derart, dass die Zähne 8 der angetriebenen Prägewalze 2 in die Rillen greifen. Die zwischen den Rillen 9 entstandenen Ringe 10 sind nach aussen hin ebenso verjüngt und abgeflacht derart, dass sie zwischen die pyramidenstumpfförmigen Zähne 8 eingreifen.

Sinngemäss weist die dritte Prägewalze 4 längsgerichtete Rillen 11 auf, zwischen denen sich Längsrippen 12 bilden, die ebenfalls, wie die Ringe 10, sich nach aussen verjüngen und abgeflacht sind derart, dass die Längsrillen 11 und die Längsrippen mit den Zähnen 8 der angetriebenen Prägewalze 2 zusammenarbeiten.

Die Erzeugung von Schriftzügen, Signete und dergleichen, im folgenden Muster genannt, wird dadurch realisiert, dass auf der Prägewalze 2 mit den Zähnen 8 Zähne entfernt oder gekürzt werden. Die Ringe, bzw. Längsrippen können das Aussehen der von der Prägewalze mit Zähnen erzeugten Prägemuster beeinflussen. Mit Hilfe der erfindungsgemässen Prägewalzenanordnungen ist es möglich, durch Variation der Zähne 8 oder der Ringe 10 oder der Längsrippen 12, d.h. durch Änderung der Höhe, der Flanken oder Kanten der Zähne, Ringe oder Längsrippen oder Musterung deren oberen Fläche Prägemuster oder Zeichen herzustellen, die einen besonderen optischen Effekt erzeugen, derart, dass beim Betrachten des Prägemusters unter einem unterschiedlichen Winkel und/oder einer unterschiedlichen Beleuchtung sich dieses verändert oder nur unter einem bestimmten Winkel und/oder bestimmter Beleuchtung erscheint. Dabei kann die Höhe der Zähne, Ringe oder Längsrippen variiert werden oder einzelne Zähne, Ringe ganz oder teilweise, Längsrippen ganz oder teilweise, anders gestaltet sein als die übrigen Elemente.

In Figur 1 oder 2 ist angedeutet, dass die zweite und dritte Prägewalze 3 und 4 mit der angetriebenen Prägewalze 2 im Eingriff stehen, doch ist dies nicht notwendigerweise immer der Fall. Es ist auch denkbar, dass die zweite, bzw. dritte Prägewalze nur mit der ersten, bzw. vorhergehenden Prägewalze im Eingriff steht, bzw. in Eingriff gebracht werden kann. Ausserdem kann es vorteilhaft sein, für bestimmte Anwendungen mehr als insgesamt drei Prägewalzen vorzusehen, die eine unterschiedliche Oberflächenstruktur aufweisen. Ferner kann sowohl der Durchmesser als auch die Länge der einzelnen Walzen unterschiedlich sein. Zusätzlich zu den Prägewalzen können auch weiche Walzen eingesetzt werden.

In Figur 2 erkennt man eine zweite Vorrichtung 13 mit der gleichen angetriebenen Walze 2 und den Prägewalzen 3 und 4 mit den Ringen, bzw. Längsrippen, wobei die Reihenfolge der Prägewalzen 3 und 4 gegenüber der Reihenfolge gemäss Figur 1 vertauscht ist und, in Laufrichtung des Materials 6 gesehen, hier zuerst die Prägewalze mit den Längsrippen in Eingriff kommt und dann die Prägewalze mit den Ringen.

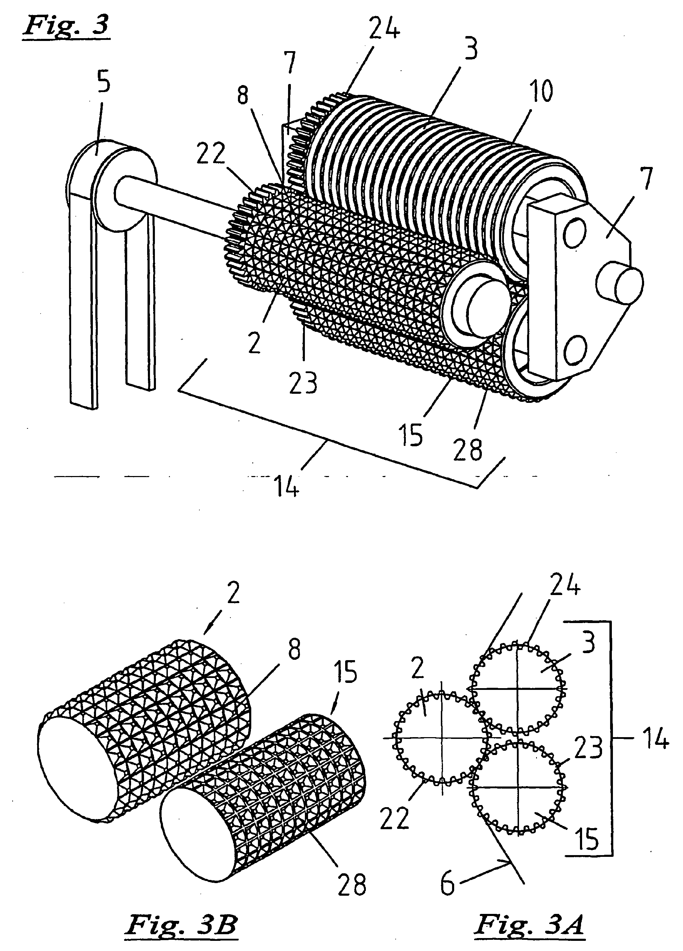

In dem Ausführungsbeispiel gemäss Figur 3 weist die Vorrichtung 14 wieder dieselbe angetriebene Walze 2 und, wie in Figur 1, als zweite Walze die Prägewalze 3 mit den Ringen 10 auf. Die nachfolgende Prägewalze 15 weist entweder eine identische Zahnung wie die Prägewalze 2 auf, das heisst die gleichen Zähne 8, deren Basis parallel und senkrecht zur Längsachse angeordnet sind oder, wie eingezeichnet, eine dazu komplementäre Zahnung 28.

Analog zur bereits genannten WO-A-0 069 622 ist es zur Erzeugung der Sonderprägungen vorteilhaft, die Prägewalzen 2 und 15 mit den Zähnen 8, bzw. Lücken 28 zwangs zu synchronisieren, wie dies in Figur 3A durch die Zahnräder 22 und 23 angedeutet ist, wobei die Zahnräder allgemein für Synchronisationselemente, die andere, an sich bekannte Synchronisationsmittel wie elektronische Bauelemente und dergleichen umfassen, stehen. Zwangssynchronisierung ist besonders auch dann angebracht, falls sich das Material beim Prägen stark verzieht.

Im allgemeinen wird man für die hier vorgesehene Prägungsart Prägewalzen-Paare mit Zähnen mit der sogenannten Pin up-Pin down-Konstellation wählen, wo ein Zahn 8 einer Walze in eine Lücke 28 an der anderen Walze passt, siehe Figur 3B.

Es ist für besondere Situationen jedoch auch denkbar, die sogenannte Pin up-Pin up Situation zu wählen, wobei jeweils ein Zahn einer Walze zwischen vier Zähne der anderen Walze fallen, wobei alle Zähne gleich gestaltet und angeordnet sind. Obwohl es auch hier für die vorgeschlagene spezielle Prägung vorteilhaft ist, die beiden Walzen zwangs-zusynchronisieren, kann auch der Betrieb gewählt werden, bei dem die angetriebene Walze 2 ortsfest gelagert ist und die andere Walze mit Zähnen frei laufend und so gelagert ist, wie dies in der Einleitung bezüglich US-A-5 598 774 beschrieben ist. Daraus geht hervor, dass die Achsen der Prägewalzen sowohl in Längsrichtung als auch/oder in Druckrichtung und/oder in Durchlaufrichtung des Materials auslenkbar sind. Dies ermöglicht eine Einstellung der Walzen um ein genaues Ineinandergreifen der Zähne und damit ein einwandfreies Bearbeiten des Materials zu ermöglichen, ohne dieses zu zerknittern. Dies ist auch in der EP-A-0 925 911 des gleichen Anmelders beschrieben.

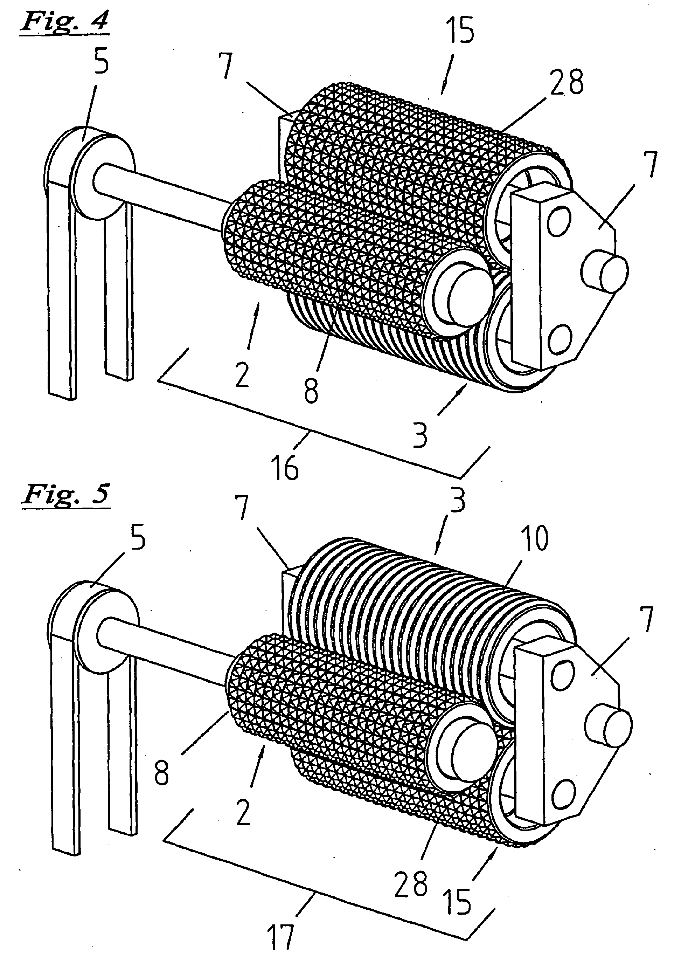

Als Variante zu Figur 3 ist das Ausführungsbeispiel gemäss Figur 4 dargestellt, wobei die Reihenfolge der Walzen 3 und 15 vertauscht ist. Figur 5 zeigt eine weitere Variante zu den figuren 3 und 4, wobei die Vorrichtung 17 in Figur 5 dieselbe angetriebene Walze 2 und dieselbe Prägewalze 15 wie in den Figuren 3 und 4 aufweist, sowie die Prägewalze 3 mit den Ringen 10, während in Figur 5,-im Gegensatz zur Ausführung gemäss Figur 3, die Prägewalzen nicht zwangssynchronisiert sind.

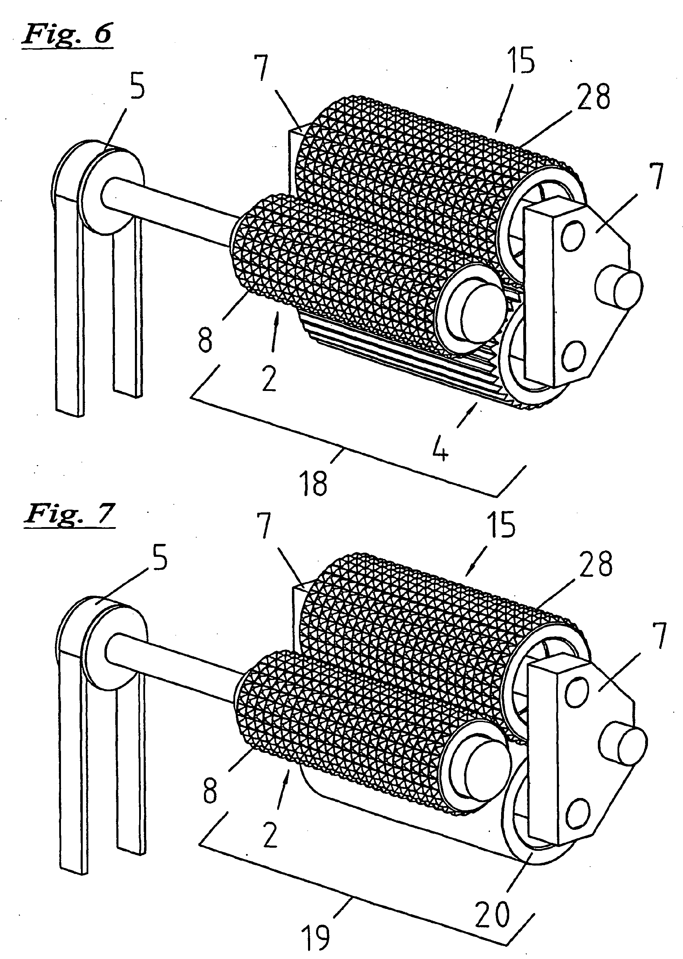

In Figur 6 ist ein weiteres Ausführungsbeispiel beschrieben, worin die Vorrichtung 18 die beiden Prägewalzen 2 und 15 sowie die Prägewalze 4 mit den Längsrippen 12 aufweist.

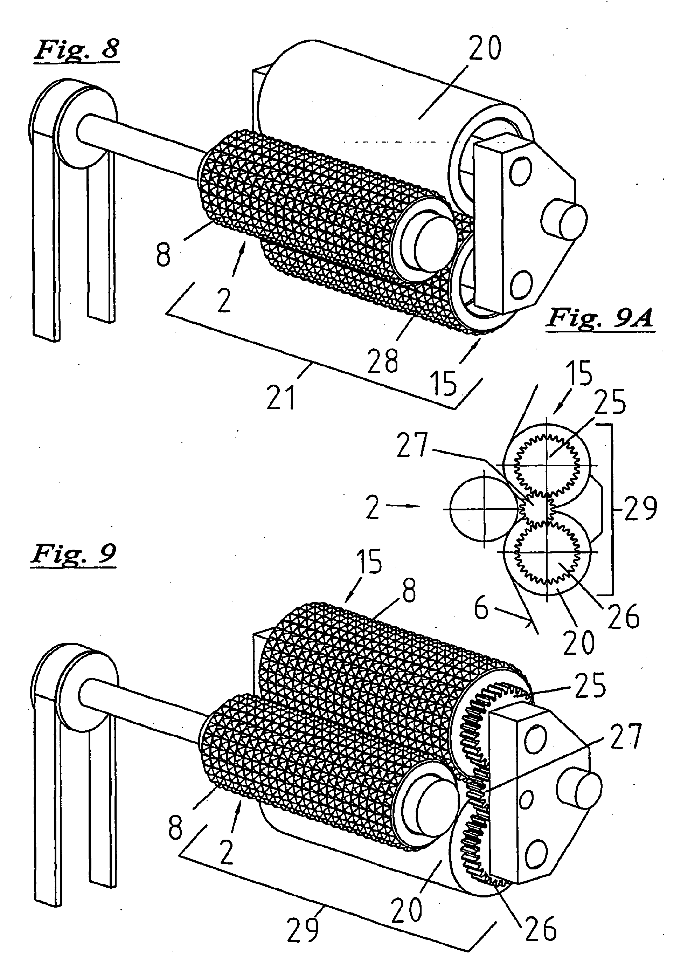

In den Figuren 7 und 8 ist ein weiteres Ausführungsbeispiel mit Variante eingezeichnet, wobei in dieser Vorrichtung 19 die erste Walze die angetriebene Walze 2 und die zweite Walze die Prägewalze 15 aus den vorhergehenden Beispielen ist, während die dritte Walze, in Abweichung von den vorhergehenden Beispielen, eine Gummiwalze 20 mit vergleichsweise glatter Oberfläche ist. In der Vorrichtung 21 gemäss Figur 8 ist die Reihenfolge der Walzen 15 und 20 vertauscht.

In den Figuren 9 und 9A ist eine Variante zur Ausführung von Figur 7 dargestellt, in der die beiden Prägewalze 2 und 15 die gleiche Zahnung 8 aufweisen, also in einer Pin up-Pin up-Konfiguration stehen und die beiden nichtangetriebenen Walzen 15 und 20 über ein Getriebe mit den Zahnrädern 25, 26 und 27 zwangssynchronisiert sind.

Ausgehend von diesen Beispielen sind Variationen denkbar: So kann die Gummiwalze 20 anstatt der Ringwalze 3 oder der längsgerippten Walze 4 verwendet werden.

In den Figuren sind ferner die Lagerungen, bzw. die beiden Joche 7, die die beiden Lager aufnehmen, schematisch eingezeichnet. Damit ist auch angedeutet, dass die Lagerungen der Walzenachsen einzeln, gruppenweise oder gemeinsam erfolgen kann.

Die Prägewalzen müssen auch hier nicht den gleichen Durchmesser und die gleiche Länge aufweisen, doch in Abweichung vom ersten Beispiel müssen die Durchmesser der Walzen, falls sie nicht gleich sind, in einem ganzzahligen Verhältnis zueinander stehen, falls die Synchronisation durch Zahnräder erfolgt, während die Länge individuell sein kann.

In der EP-A-1 048 369 des gleichen Anmelders, auf die ausdrücklich Bezug genommen wird, ist eine Prägevorrichtung angegeben, in der mindestens eine der Prägewalzen in einer Wechseleinheit enthalten ist derart, dass sie in einer vorgegebenen Stellung in einem Lagergestell eingesetzt werden kann.

Bei der vorliegenden Vorrichtung mit mindestens drei Prägewalzen ist das Vorsehen der Walzen in Wechseleinheiten, einzeln oder in Gruppen, von besonderem Vorteil, da dann der Rationalisierungseffekt und die Umweltschonung besonders zum Tragen kommen.

Aus dem oben offenbarten geht hervor, dass die Vorrichtung gemäss der Erfindung viele Vorteile aufweist:
a) Die Verwendung von Walzen mit unterschiedlichen Strukturen, wobei mindestens eine Walze die vorbekannten Zähne aufweist und mindestens eine andere Walze eine andere Struktur, z.B. Längsrippen oder Ringe aufweist oder eine glatte Gummiwalze ist, erlaubt eine solch feine Prägung, dass je nach Blickwinkel und/oder Beleuchtung die Strukturen veränderlich sind. Damit können weitgehendst fälschungssichere Sicherheitsmerkmale erzeugt werden.
b) Die Verwendung von mehr als zwei Walzen erlaubt es, die Papierfasern optimal zu brechen und den Memoryeffekt des Papiers grösstenteils zu neutralisieren. Dies wird dadurch ermöglicht, dass die nacheinander angeordneten Prägewalzen im Betrieb genau positioniert sind. Dadurch kann erreicht werden, dass selbst bei sehr feinen Satinierungen ohne optische Störung vorhandene Muster nachgeprägt werden können.
c) Durch das bessere Faltverhalten der umhüllenden Verpackungsfolien kann die vorgefaltete Verpackungseinheit wieder problemlos in die Schachtel eingeführt werden.
d) Durch günstige Konstruktion wird ein Wechsel von einem Prägeaspekt zu einem anderen und dabei die Wechselzeiten der Prägewalzen und somit Stillstandzeiten der Verpackungsmaschine verkürzt.
e) Die Vorrichtung erlaubt es, eine Prägemaschine zu entwerfen, die über eine Prägewalzenkonstruktion verfügt, die ohne Walzendurchbiegungskompensation auskommt.

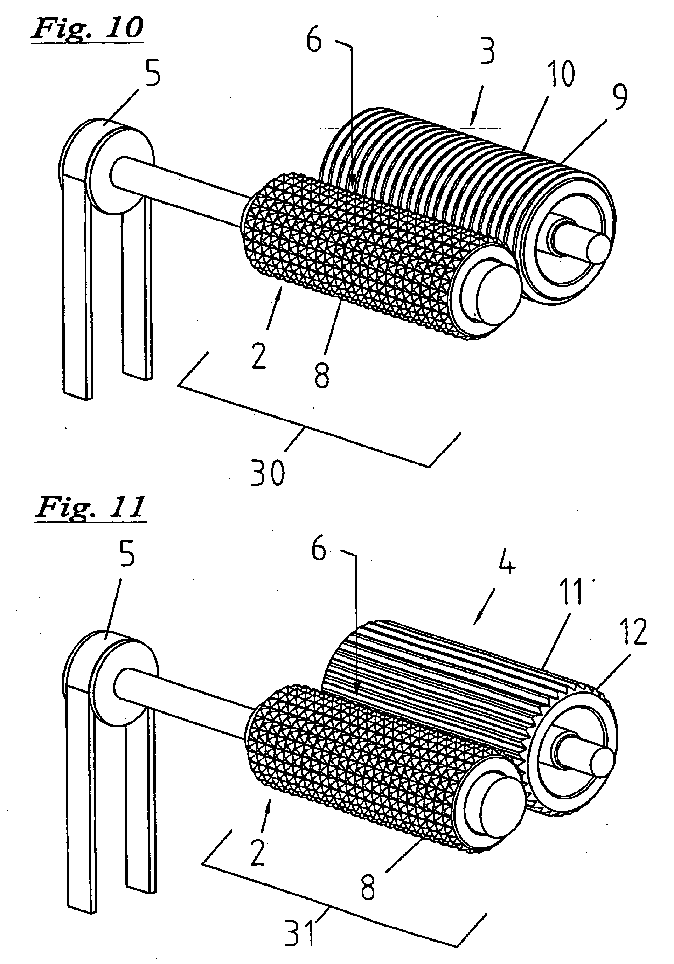

Weitere Versuchen haben ergeben, dass die meisten oben genannten Vorteile auch mit einer Vorrichtung mit zwei Prägewalzen gemäss den Figuren 10 oder 11 erzielt werden können.

Die nur sehr schematisch gezeichnete Vorrichtung 30 in Figur 10 weist ebenfalls die erste Prägewalze 2 mit den Zähnen 8 sowie eine zweite Prägewalze 3 mit den Ringen 10 und Rillen 9 auf. Ausserdem ist der Antrieb 5 eingezeichnet, während die Joche nicht eingezeichnet sind.

In Figur 11 ist eine Vorrichtung 31 mit der ersten Prägewalze 2 mit den Zähnen 8 sowie der zweiten Prägewalze 4 mit den Längsrippen 12 und Längsrillen 11 angegeben. Die anderen Elemente sind die gleichen wie in den vorhergenden Vorrichtungen.

Das für das Drei-Walzen-System gemäss den Figuren 1-9 Gesagte gilt sinngemäss auch für das Zwei-Walzen-System gemäss den Figuren 10 und 11, mit dem Vorteil der grösseren Einfachheit. Falls bei besonders schwierigem Material nach dem Behandeln mit zwei Rollen eine Tendenz zum Aufrollen besteht, kann eine Glättungseinrichtung, z.B. mit glatten Gummirollen, nachgeschaltet werden.

## Patentansprüche

1. Vorrichtung zum Satinieren von metallisierten oder metallenen Verpackungsfolien mit mindestens einer ersten (2) und einer zweiten Prägewalze (3, 4, 15, 20), zwischen denen dieVerpackungsfolie unter Druck durchführbar ist, um ein Muster zu erzeugen, wobei der zweiten Prägewalze mindestens eine weitere, mit der ersten oder zweiten Prägewalze zusammenwirkende Prägewalze (3, 4, 15, 20) nachgeschaltet ist, zwischen denen die bemusterte Verpackungsfolie (6) durchführbar ist, **dadurch gekennzeichnet, dass** die erste, angetriebene Prägewalze (2) eine aus homogen gerasterten individuellen Zähnen (8) bestehende Verzahnung und mindestens eine andere Prägewalze (3, 4, 20) eine Oberflächenstruktur ohne individuellen Zähne aufweist, wobei die mindestens eine (3, 4) der weiteren Prägewalzen (3, 4, 15, 20) Ringe (10) oder Längsrippen (12) aufweist, der Querschnitt der Ringe oder Längsrippen sich nach aussen verjüngt und die Ringe oder Längsrippen abgeflacht sind, wobei die Dimensionen der Ringe oder Längsrippen und der dazwischen liegenden Rillen (9, 11) den Dimensionen der Zähne (8) der ersten, angetriebenen Prägewalze (2) entsprechen, wobei sämtliche Zähne in die Rillen zwischen den Ringen oder Längsrippen greifen.

2. Vorrichtung zum Satinieren von metallisierten oder metallenen Verpackungsfolien mit einer ersten (2) und einer zweiten Prägewalze (3, 4), zwischen denen die Verpackungsfolie (6) unter Druck durchführbar ist, um ein Muster zu erzeugen, **dadurch gekennzeichnet, dass** erste, angetriebene Prägewalze (2) eine aus homogen gerasterten individuellen Zähnen (8) bestehende Verzahnung und die zweite Prägewalze (3, 4) eine Oberflächenstruktur ohne individuellen Zähne aufweist, wobei die zweite Prägewalze Ringe (10) oder Längsrippen (12) aufweist, der Querschnitt der Ringe oder Längsrippen sich nach aussen verjüngt und die Ringe oder Längsrippen abgeflacht sind, wobei die Dimensionen der Ringe oder Längsrippen und der dazwischen liegenden Rillen (9, 11) den Dimensionen der Zähne (8) der ersten, angetriebenen Prägewalze (2) entsprechen, wobei sämtliche Zähne in die Rillen zwischen den Ringen oder Längsrippen greifen.

3. Vorrichtung nach Anspruch 1 oder 2, **dadurch gekennzeichnet, dass** zum Erzeugen von Zeichen, deren Erscheinungsbild sich je nach Blickwinkel des Betrachters und/oder Art und/oder Standort der Beleuchtungsquelle ändert, die Höhe und/oder Geometrie und/oder Oberfläche von Zähnen (8), Ringe (10) oder Längsrippen (12) anders gestaltet sind als bei den übrigen Zähnen (8), Ringen (10) oder Längsrippen (12).

4. Vorrichtung nach Anspruch 1, **dadurch gekennzeichnet, dass** die mindestens eine (15) der weiteren Prägewalzen dieselbe Zahnung (8) wie die erste, angetriebene Prägewalze (2) oder eine zu dieser Zahnung (8) komplementäre Zahnung (28) aufweist.

5. Vorrichtung nach einem der Ansprüche 1, 3, 4, **dadurch gekennzeichnet, dass** mindestens eine der weiteren Prägewalzen eine glatte Gummiwalze (20) ist.

6. Vorrichtung nach einem der Ansprüche 1 bis 5, **dadurch gekennzeichnet, dass** die Prägewalzen über Synchronisationsmittel (22, 23 24; 25, 26, 27) miteinander zwangssynchronisiert sind.

7. Vorrichtung nach Anspruch 4, **dadurch gekennzeichnet, dass** die nicht angetriebene Prägewalze (15) derart gelagert ist, dass sie in Längsrichtung der Achse und/oder in der Anpressrichtung und/oder in der Laufrichtung des zu prägenden Materials (6) auslenkbar ist.

8. Vorrichtung nach einem der Ansprüche 1 bis 7, **dadurch gekennzeichnet, dass** sich die Gravur auf den Prägewalzen (2, 15) mit Zähnen (8, 28) befindet.

9. Vorrichtung nach einem der Ansprüche 1 bis 8 für nicht-zwangssynchronisierte Prägewalzen, **dadurch gekennzeichnet, dass** die Walzen gleiche oder ungleiche Durchmesser und/oder Längen aufweisen.

10. Vorrichtung nach einem der Ansprüche 1 bis 8 für zwangssynchronisierte Prägewalzen, **dadurch gekennzeichnet, dass** die Prägewalzen gleiche Durchmesser oder Durchmesser aufweisen, die in einem ganzzahligen Verhältnis zueinander stehen und gleiche oder unterschiedliche Längen aufweisen.

11. Vorrichtung nach einem der Ansprüche 1 bis 10, **dadurch gekennzeichnet, dass** die nicht angetriebenen Walzen einzeln, in Gruppen oder alle miteinander mit der angetriebenen Prägewalze in Eingriff bringbar sind.

12. Vorrichtung nach einem der Ansprüche 1 bis 11, **dadurch gekennzeichnet, dass** mindestens eine der Prägewalzen in einer Wechseleinheit enthalten ist, die in das Lagergestell einsetzbar ist.

13. Vorrichtung nach Anspruch 12, **dadurch gekennzeichnet, dass** die Prägewalzen einzeln, in Gruppen oder gemeinsam in einer Wechseleinheit angeordnet sind.

## Claims

1. Device for satinizing metallised or metallic packaging foils, comprising at least a first (2) and a second embossing roll (3, 4, 15, 20) between which the packaging foil is capable of being passed under pressure in order to produce a pattern, the second embossing roll being followed by at least another embossing roll (3, 4, 15, 20) which cooperates with the first or second embossing roll and between which the patterned packaging foil (6) is capable of being passed, **characterised in that** the first, driven embossing roll (2) comprises a toothing composed of individual teeth (8) forming a homogenous grid and at least one other embossing roll (3, 4, 20) comprises a surface structure without individual teeth, at least one (3, 4) of the additional embossing rolls (3, 4, 15, 20) comprising rings (10) or longitudinal ribs (12), the cross-section of the rings or longitudinal ribs being outwardly tapered, and the rings or longitudinal ribs being flattened, and the dimensions of the rings or longitudinal ribs and of the grooves (9, 11) therebetween corresponding to the dimensions of the teeth (8) of the first, driven embossing roll (2), and all teeth engaging in the grooves between the rings or the longitudinal ribs.

2. Device for satinizing metallised or metallic packaging foils, comprising at least a first (2) and a second embossing roll (3, 4) between which the packaging foil (6) is capable of being passed under pressure in order to produce a pattern, **characterised in that** the first, driven embossing roll (2) comprises a toothing composed of individual teeth (8) forming a homogenous grid and the second embossing roll (3, 4) comprises a surface structure without individual teeth, the second embossing roll comprising rings (10) or longitudinal ribs (12), the cross-section of the rings or longitudinal ribs being outwardly tapered, and the rings or longitudinal ribs being flattened, and the dimensions of the rings or longitudinal ribs and of the grooves (9, 11) therebetween corresponding to the dimensions of the teeth (8) of the first, driven embossing roll (2), and all teeth engaging in the grooves between the rings or the longitudinal ribs.

3. Device according to claim 1 or 2, **characterised in that** in order to produce signs whose appearance varies according to the viewing angle of the observer and/or the kind and/or the position of the light source, the height and/or the geometry and/or the surface of teeth (8), rings (10), or longitudinal ribs (12) are designed differently from the remaining teeth (8), rings (10), or longitudinal ribs (12).

4. Device according to claim 1, **characterised in that** the at least one (15) additional embossing roll comprises the same toothing (8) as the first, driven embossing roll (2) or a toothing (28) that is complementary to that toothing (8).

5. Device according to one of claims 1, 3, 4, **characterised in that** at least one of the additional embossing rolls is a smooth rubber roll (20).

6. Device according to one of claims 1 to 5, **characterised in that** the embossing rolls are positively synchronised with one another by synchronising means (22, 23, 24; 25, 26, 27).

7. Device according to claim 4, **characterised in that** the non-driven embossing roll (15) is journalled such that it is capable of an excursion in the longitudinal direction of the axle and/or in the contact pressure direction and/or in the travelling direction of the embossed material (6).

8. Device according to one of claims 1 to 7, **characterised in that** the engraving is provided on the embossing rolls (2, 15) that are provided with teeth (8, 28) .

9. Device according to one of claims 1 to 8 for embossing rolls that are not positively synchronised, **characterised in that** the rolls have equal or unequal diameters and/or lengths.

10. Device according to one of claims 1 to 8 for positively synchronised embossing rolls, **characterised in that** the embossing rolls have equal diameters or diameters forming an integral ratio and have equal or unequal lengths.

11. Device according to one of claims 1 to 10, **characterised in that** the non-driven rolls are capable of being brought into engagement with the driven embossing roll individually, in groups, or in common.

12. Device according to one of claims 1 to 11, **characterised in that** at least one of the embossing rolls is contained in an exchangeable unit that is insertable in the bearing mount.

13. Device according to claim 12, **characterised in that** the embossing rolls are arranged in an exchangeable unit individually, in groups, or in common.

## Revendications

1. Dispositif pour le satinage de feuilles d'emballage métallisées ou métalliques, comprenant au moins un premier (2) et un deuxième rouleau de gaufrage (3, 4, 15, 20) entre lesquels la feuille d'emballage peut être passée sous pression afin de produire un motif, le deuxième rouleau de gaufrage étant suivi d'au moins un autre rouleau de gaufrage (3, 4, 15, 20) qui coopère avec le premier ou le deuxième rouleau de gaufrage et entre lesquels la feuille d'emballage (6) munie du motif peut être passée, **caractérisé en ce que** le premier rouleau de gaufrage (2), lequel est entraîné, comporte une denture composée de dents individuelles (8) formant un quadrillage homogène, et qu'au moins un autre rouleau de gaufrage (3, 4, 20) comporte une structure superficielle sans dents individuelles, l'un (3, 4) au moins des rouleaux de gaufrage supplémentaires (3, 4, 15, 20) comportant des anneaux (10) ou des nervures longitudinales (12), la coupe transversale des anneaux ou nervures longitudinales étant effilée vers l'extérieur et les anneaux ou nervures longitudinales étant aplatis, et les dimensions des anneaux ou nervures longitudinales et des gorges (9, 11) entre elles correspondant aux dimensions des dents (8) du premier rouleau de gaufrage (2) entraîné, et toutes les dents s'engrenant dans les gorges entre les anneaux ou nervures longitudinales.

2. Dispositif pour le satinage de feuilles d'emballage métallisées ou métalliques, comprenant un premier (2) et un deuxième rouleau de gaufrage (3, 4) entre lesquels la feuille d'emballage (6) peut être passée sous pression afin de produire un motif, **caractérisé en ce que** le premier rouleau de gaufrage (2), lequel est entraîné, comporte une denture composée de dents individuelles (8) formant un quadrillage homogène et que le deuxième rouleau de gaufrage (3, 4) comporte une structure superficielle sans dents individuelles, le deuxième rouleau de gaufrage comportant des anneaux (10) ou des nervures longitudinales (12), la coupe transversale des anneaux ou nervures longitudinales étant effilée vers l'extérieur et les anneaux ou nervures longitudinales étant aplatis, et les dimensions des anneaux ou nervures longitudinales et des gorges (9, 11) entre elles correspondant aux dimensions des dents (8) du premier rouleau de gaufrage (2) entraîné, et toutes les dents s'engrenant dans les gorges entre les anneaux ou nervures longitudinales.

3. Dispositif selon la revendication 1 ou 2, **caractérisé en ce que** pour créer des signes dont l'aspect change selon l'angle de vue de l'observateur et/ou le genre et/ou la position de la source de lumière, la hauteur et/ou la géométrie et/ou la surface de dents (8), d'anneaux (10) ou de nervures longitudinales (12) est différente de celle des autres dents (8), anneaux (10) ou nervures longitudinales (12).

4. Dispositif selon la revendication 1, **caractérisé en ce que** ledit au moins un (15) des rouleaux de gaufrage supplémentaires présente la même denture (8) que le premier rouleau de gaufrage (2) qui est entraîné, ou une denture (28) complémentaire à cette denture (8).

5. Dispositif selon l'une des revendications 1, 3, 4, **caractérisé en ce que** l'un au moins des rouleaux de gaufrage supplémentaires est un rouleau lisse en caoutchouc (20).

6. Dispositif selon l'une des revendications 1 à 5, **caractérisé en ce que** les rouleaux de gaufrage sont positivement synchronisés réciproquement par des moyens de synchronisation (22, 23 24; 25, 26, 27).

7. Dispositif selon la revendication 4, **caractérisé en ce que** le rouleau de gaufrage (15) non entraîné est supporté de manière à être capable d'une excursion dans la direction longitudinale de l'axe et/ou dans la direction de la pression de contact et/ou dans la direction de passage du matériau à gaufrer (6).

8. Dispositif selon l'une des revendications 1 à 7, **caractérisé en ce que** la gravure se trouve sur les rouleaux de gaufrage (2, 15) munis de dents (8, 28).

9. Dispositif selon l'une des revendications 1 à 8 pour des rouleaux de gaufrage qui ne sont pas positivement synchronisés, **caractérisé en ce que** les rouleaux ont des diamètres égaux ou inégaux et/ou des longueurs égales ou inégales.

10. Dispositif selon l'une des revendications 1 à 8 pour des rouleaux de gaufrage positivement synchronisés, **caractérisé en ce que** les rouleaux de gaufrage ont des diamètres égaux ou des diamètres formant un rapport entier, et ont la même longueur ou des longueurs inégales.

11. Dispositif selon l'une des revendications 1, à 10, **caractérisé en ce que** les rouleaux non entraînés sont capables d'être engrenés avec le rouleau de gaufrage entraîné individuellement, en groupes ou en commun.

12. Dispositif selon l'une des revendications 1, à 11, **caractérisé en ce que** l'un au moins des rouleaux de gaufrage est contenu dans une unité échangeable pouvant être introduite dans le châssis de support.

13. Dispositif selon la revendication 12, **caractérisé en ce que** les rouleaux de gaufrage sont agencés dans une unité échangeable individuellement, en groupes ou en commun.
